# EUROPEAN PATENT APPLICATION

(11) **EP 2 357 510 A1**
(43) Date of publication of application: **17.08.2011**
(21) Application number: 11152021.9
(22) Date of filing: 25.01.2011
(51) Int. Cl.: G02C 7/14, G02C 9/00

(54) **Sports glasses**

(30) Priority: 25.01.2010 SE 1000069
(71) Applicant: Optergo AB, 435 25 Mölnlycke (SE)
(72) Inventor: Hellström, Björn, 435 40 Mölnlycke (SE)
(74) Representative: Kraenzmer, Martin

(57) **Abstract**

The invention relates to a pair of sports glasses comprising a curved visor (11) and means for attaching the sports glasses to a user arranged at the side portions of the visor (11). The glasses further comprises a module (31) attached to the inner surface of the visor (11), which module (31) comprises a first attachment portion (33) arranged in contact with the inner surface of the visor (11), a bridge portion (34) facing the nose of a user, and at least one support portion (35, 35') for an optical prism arranged to extend in a lateral direction to a position adjacent an eye of the wearer. The prism is attached to each support portion (35, 35'), wherein the visor (11) provides a non-refracted view along a first axis and the prism provides a refracted view along a second axis.

## Description

### TECHNICAL FIELD

The invention relates to the field of optical aids for sportsmen and others who need to simultaneously view two areas located along different lines of sight. In particular, the invention relates to visors wearable by speed skaters, cyclists, skiers, in-line skaters, scuba divers and others who desire to move their bodies and/or vehicles as aerodynamically as possible, i.e. with their heads facing downwardly, while safely viewing objects and the terrain in front of them.

### BACKGROUND ART

In recent years advances have been made in speed skating in order to improve skate design and the aerodynamic properties of skating apparel. Similar problems have been addressed in bicycle design, cycling apparel, helmet design and cycling techniques aimed at reducing rolling and wind resistance thereby maximizing the efficiency of the bicycle as a racing vehicle. The same types of problems occur in downhill ski racing. However, the major factor for reducing aerodynamic resistance is the body position.

The most aerodynamically efficient skating, cycling or skiing position is the full tuck (in skiing) or crouch (in skating or cycling) in which the torso is approximately parallel to or at least at an acute angle relative to the ground. In such a position the face is pointed down to face the ground (hereinafter termed the "prone position"), the hands are extended (over low, forwardly-mounted handle bars in the case of cycling) and the elbows are tucked in to the body. It is desirable that this position be maintained for as long as possible during a race or trip to conserve energy and maximize speed. However, without optical assistance, a skater, cyclist or skier must regularly raise his/her head to check his position on the ice, road or hill and ensure that no obstacles are in his path.

One problem facing a skater, cyclist or skier is to maintain a partial tuck or crouch with his head bent up so he can see forward. This position is uncomfortable and virtually impossible to safely maintain over long distances. This position is also less aerodynamic than a full tuck or crouch with the head in the prone position. During a sports event or race a participant is required to simultaneously monitor different areas at the same time. Conventionally the participant is required to shift his or her gaze from one area to the other and take the chance that relevant information might be missed.

One type of device, described in US 4 647 165, has been designed to allow a cyclist to see forward while riding in a full crouch with the head facing down. This device comprises a pair of prisms mounted to the frame of a pair of glasses by means of clips. In use, the image of an object being viewed is reflected internally in the prisms into the eyes of the user when he looks into the prisms.

Such an arrangement has a number of disadvantages. The prisms are attached to the outer surface of the glasses, whereby the distance from the eyes requires a conscious effort from the user to focus on the image seen through the prisms. Mounting the prisms on the outside also makes them sensitive to dirt and smearing, which may render them opaque. Vibration of the frame of the glasses can distort the image being viewed.. Moreover, the field of vision is limited, and one must turn ones head to see the view from the side.

A second type of device, described in US 4 679 916, attempts to overcome some of these problems. The reference discloses a frame for mounting mirrors about the eyes of a cyclist and a method of viewing related thereto. The reference also discloses the attachment of separate, spaced-apart mirrors within a transparent hood.

At least two major disadvantages arise from such an arrangement. First, the very inclusion of projecting mirror elements within an optical device worn about the eyes is potentially dangerous. In a crash, such elements could become detached or break into and/or be impacted by the face or eyes of the wearer depending upon the type and force of blow sustained by the frame. This is obviously undesirable.

Second, if the mirrors are large enough to provide a practical field of vision, they tend to obscure the wearer's view in the heads-up position. Conversely, if the mirrors are small and widely spaced-apart as described in the Roller reference, substantial blind spots are created, thereby imperilling the wearer. Additionally, the wearer cannot simultaneously monitor the route in front of him while also looking down at his skates, bicycle or skis, as appropriate.

It is an object of the present invention to overcome the disadvantages of the prior art by providing an improved optical device. The optical device according to the invention permits the user to view an image of any object or scene positioned along one line of sight superimposed over a direct view of a different object or scene along a second line of sight without the above-mentioned disadvantages.

### DISCLOSURE OF INVENTION

The object of the invention is achieved by means of a pair of sports glasses defined according to the appended claims.

The present invention aims to provide sports glasses with means for simultaneously viewing of two areas located along different lines of sight, while at the same time minimizing weight and improving safety for a wearer. The invention further aims to improved the sideways field of vision and to provide means for adjusting the sports glasses to each individual wearer.

In the text, the term "sports glasses" relates to sports glasses and similar eyewear for sports activities where it is desirable to simultaneously monitor different areas at the same time. References to a relative position, such as "front", "rear", "inner", "outer", "side", "longitudinal" or "transverse" are taken relative to a general horizontal axis coinciding with the location of the optical axis of the sports glasses when in use and with the head of the wearer located in a normal, upright position, and with the eyes looking straight ahead. For instance, in the latter position an axis passing through a central axis of the glasses in the direction of view of the wearer can be defined as a longitudinal axis.

According to a preferred embodiment, the invention relates to sports glasses comprising a curved visor, said visor having an outer surface, an inner surface and a continuous edge extending along the upper, lower and side portions of the visor, and means for attaching the sports glasses to a user arranged at the side portions of the visor. The visor may be manufactured in one piece and may have a curved cross-section both in the horizontal plane and in the vertical plane. In this way, the amount of incident light, especially from the sides, can be reduced and the amount of refraction through the visor can be minimized.

The sports glasses further comprises a module attached to the inner surface of the visor. The module may comprise a first attachment portion arranged in contact with the inner surface of the visor, a bridge portion facing the nose of a user and at least one support portion for an optical prism is arranged to extend in a lateral direction to a position adjacent an eye of the wearer. The support portion(-s) may extend in one or both directions along the inner surface of the visor, ending in a location adjacent the eye or eyes of the wearer. The bridge portion may be arranged to rest directly against the bridge of the nose, but may also be provided with a soft or resilient intermediate portion for increased comfort. The said intermediate portion may be moulded to the shape of the nose of an individual for maximum comfort. An optical prism may be attached to each support portion, wherein the visor provides a non-refracted view along a first axis and the prism provides a refracted view along a second axis. The location of the prism may be selected so that the wearer can see over the upper surface of the prism(-s) when looking straight ahead along the first axis, with the head located in the upright position. In this way the wearer need only shift his/her gaze a short distance downwards in order to look straight ahead along the second axis, with the head located in the prone position. The support portion may comprise a flat material section, for instance a metal sheet made from e.g. steel or titanium. The said flat material section may be located in a substantially horizontal plane extending in the transverse direction of the visor and coinciding with the said first axis, the said second axis or located in a plane between the first and second axes.

The function of refracting prisms for use in this way is described in detail in, for instance, US 6 280 031. This document provides a general description of how a pair of optical viewing glasses can be provided with prisms in order to give the wearer a redirected, refracted field of view along an axis separated from an axis along the normal field of view. The document also suggests a number of suitable angles for use with a prism having a triangular section. Examples of internal angles for such a prism may be 70°-90° for the first angle, 60°-80° for the second angle and 20°-35° for the third angle.

The said module may be arranged so that the first attachment portion and the bridge portion are separated by a spacer portion. The spacer portion may preferably, but not necessarily, comprise a closed box section attached to and extending along at least a lower portion of the first attachment portion and the bridge portion, respectively. This box section may act as a reinforcing structure for absorbing impact forces, in order to prevent the module or the prisms attached to the module from coming into contact with the face or eyes of the wearer, for instance, in case the wearer should accidentally fall. The spacer portion may also comprise one or more metal steel sections preferably, but not necessarily, located at right angles to and attached to the first attachment portion and the bridge portion. Alternatively, the spacer portion may be in the form of a short beam having an I- or U-shaped cross-section, a hollow or box shaped plastic component, or comprise a honeycomb material. Depending on the choice of materials, the spacer component(-s) may be attached to the first attachment and bridge components by welding or by an adhesive.

The support portion(-s) may be fixed or adjustably mounted adjacent a lower portion of the module. The flat material sheet making up the support portions can be adjustably attached to a lower section of the attachment portion, which lower section is bent inwards, away from the visor, to be located in the desired plane for the support portions. The end portion of this inwardly bent section can be welded to the facing portion of the bridge portion, for increasing the stiffness of the module. In the case where the support portion is adjustably mounted, then it is preferably axially adjustable along an axis parallel to a central axis of the visor. This allows the wearer to adjust the relative distance between the eye(-s) and the prism(-s) attached to the support portion. Where the support portions comprise a single flat plate, then the support portions are adjusted simultaneously.

The first attachment portion and the bridge portion may be arranged separated by a spacer portion, as described above. However, according to one example, the first attachment portion and the bridge portion may be joined at an upper portion of the module. In one example, the first attachment portion and the bridge portion may comprise separate components of the same or dissimilar materials, for instance a metal attachment portion and a plastic bridge component. In a particular example, the first attachment portion and the bridge portion may comprise a single, unitary component that is bent at an upper portion and separated by said spacer portion at a central and/or lower portion. According to a further example, the first attachment portion the bridge portion and the spacer portions may comprise a single, unitary component, which is bent to the desired shape and welded together.

The first attachment portion may be fixed or removably attached to the inner surface of the visor. According to one example, the module can be fixed to the visor by means of a suitable adhesive, selected dependant on the material used in the visor and the attachment portion, respectively. Alternatively, the module with its first attachment portion may be removably attached to the visor. This may be achieved by means of a second attachment portion placed on the outer surface of the visor. The second attachment portion may be provided with at least one fastening means extending through a corresponding at least one hole in the visor. One example of a suitable fastening means may be, for instance, a pair of threaded pins attached to the second attachment portion, said pins having a predetermined vertical spacing and extending through and a predetermined distance past the inner surface of the visor.

The position of the first attachment portion may also be adjustable relative to the second attachment portion along a centre axis of the visor, which axis is a substantially vertical axis connecting its upper and lower portions of the visor. By providing the first attachment portion with a suitable number of pairs of holes with the same spacing, the module can be indexed in the same number of positions. For instance, the second attachment portion may be provided with two vertically spaced, threaded pins and the first attachment portion with three of pairs of holes with the same spacing. This allows the vertical position of the module to be adjusted between three positions in order to adjust the position of the visor for an individual wearer. When a desired position has been determined, the module is secured in place by fastening a pair of nuts onto the said pins.

As stated above, an optical prism may be attached to each support portion. The at least one prism may be fixed or adjustably mounted on the support portion. If the at least one prism is adjustably mounted, it is preferably, but not necessarily, adjustable in the lateral direction at right angles to the second axis and/or angularly relative to the second axis. This allows each prism to be individually adjusted so that it is placed in a desired position relative to the eye(-s) of the wearer. One example of a suitable means for adjusting a prism is one or more parallel slots through the support portion, which slots extend in the transverse direction of the visor. Each prism may be provided with a holder having a corresponding number of threaded pins for cooperation with the said slots. By making the width of the slot(-s) a predetermined distance greater than the diameter of the cooperating pins, its is possible to perform a limited angular adjustment of the prism(-s) about an axis at right angles to the contact surfaces between the holder and the support portion. A suitable angular adjustment may be ±5° relative to a central position where the prism is aligned with the longitudinal axis of the sports glasses. When a desired position has been determined, each prism is secured in place by fastening a pair of nuts onto the said pins.

It is desirable to maximize the side field of vision for the wearer along the second axis, looking through the prism(-s), without blocking the side field of vision on either side of the prism(-s), looking through the visor. According to the invention, this is achieved by providing the at least one prism with diverging side surfaces, in order to increase the side field of vision. For example, a prism placed approximately 10 mm in front of the eye may have an end surface with a transverse width of 15-20 mm. Depending on the desired side field of vision, one or both side surfaces may diverge at an angle up to 15°-20° from the longitudinal optical axis of the prism. The transverse width of the prism adjacent the inner surface of the visor is dependent not only on the width of the end surface and the selected diverging angle, but also on the available space between the eye and the visor. A longitudinal cross-section through the prism will result in a section shaped as a triangle with the internal angles having values of, for instance, 30°/60°/90°, where the acute 30° angle is located adjacent the inner surface of the visor. By selecting suitable internal angles, within the ranges indicated above, such an arrangement may allow the wearer to lean forward into a prone position with the head tilted at an angle between 60°-80° relative to a vertical plane and still have a field of vision straight ahead.

### BRIEF DESCRIPTION OF DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein:
- Figure 1: shows a schematic front view of a pair of sports glasses according to the invention;
- Figure 2: shows a schematic perspective front view of the sports glasses of Figure 1;
- Figure 3: shows a schematic perspective rear view of the sports glasses of Figure 1;
- Figure 4A: shows a schematic side view of the field of vision in an upright and a prone position, respectively, using the sports glasses according to the invention;
- Figure 4B: shows a schematic plan view of a prism according to the invention;
- Figure 5: shows an exploded view of the module and its component parts; and
- Figure 6: shows a plan view of the support portions for the prisms.

### EMBODIMENTS OF THE INVENTION

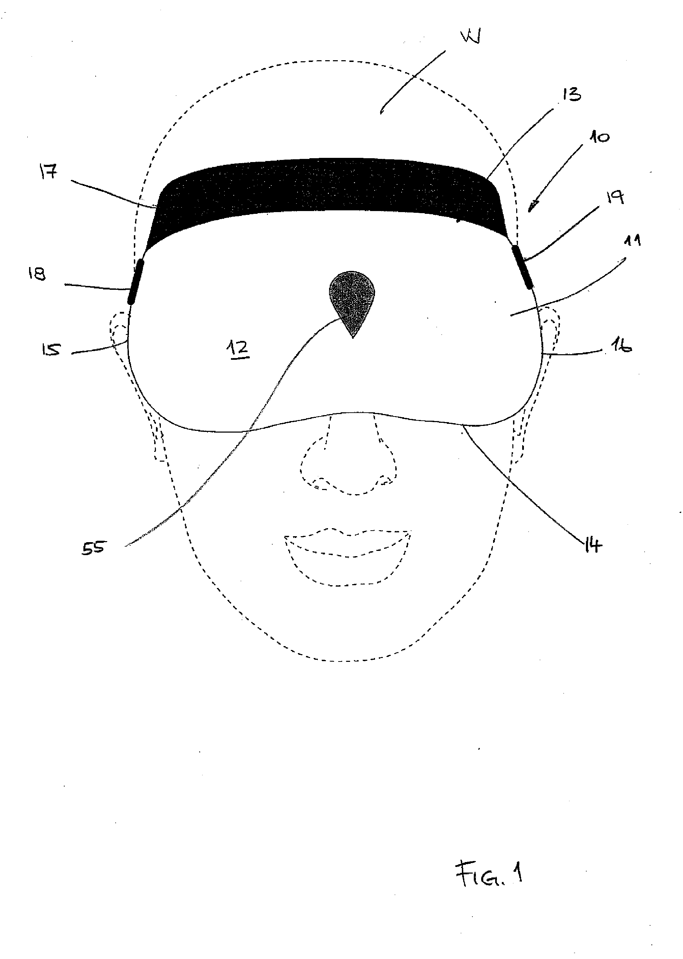

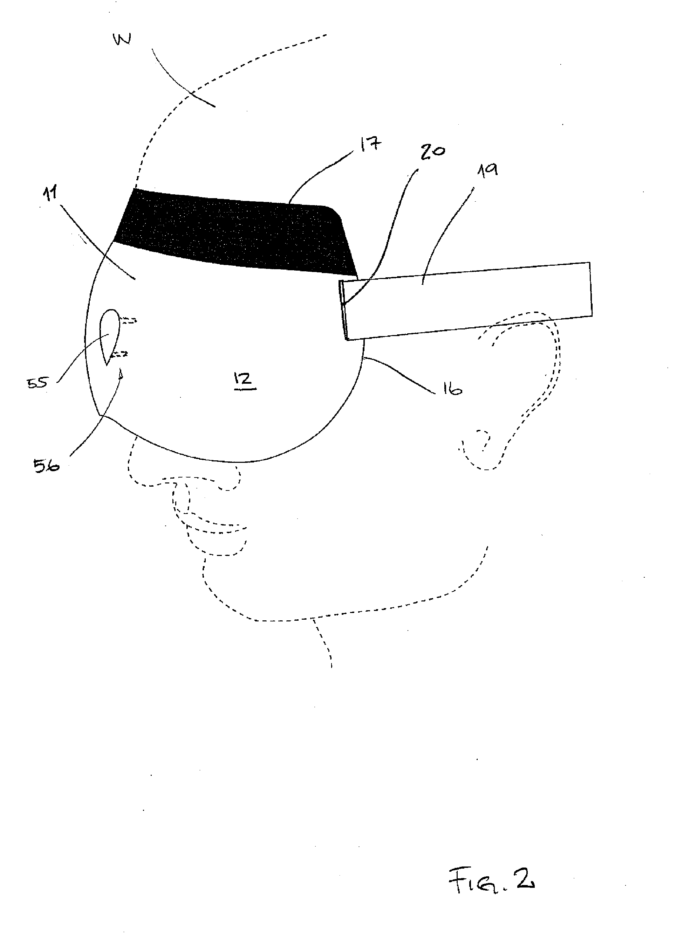

Figure 1 shows a schematic front view of a pair of sports glasses 10 according to the invention. The sports glasses comprise a visor 11 covering a major part of the upper portion of the face of a wearer W. The visor 11 has an outer surface 12 and a continuous edge extending along an upper portion 13, a lower portion 14 and two side portions 15, 16. In the example shown, the sports glasses are provided with an elastic seal 17 for closing the gap between the upper portion 13 of the visor 11 and the wearer W. The elastic seal 17 is an optional accessory for improving the aerodynamic properties of the glasses and can be made from a suitable rubber or plastic material. The glasses shown in the figure are intended for e.g. a skater wearing a fitted suit with a hood covering the head. In this example the glasses can be attached to side surfaces of the hood by means of straps 18, 19 with a hook-and-loop material, such as Velcro ®. Figure 2 shows a schematic perspective front view of the sports glasses of Figure 1. The location of one of the straps 19 is shown n Figure 2, which also schematically indicates how the strap 19 can be attached to the visor 11 through a slot 20 in the side portion 16. Alternatively, any other conventional means, such as an elastic strap, legs or temp les, may of course be used for supporting the glasses to a wearer.

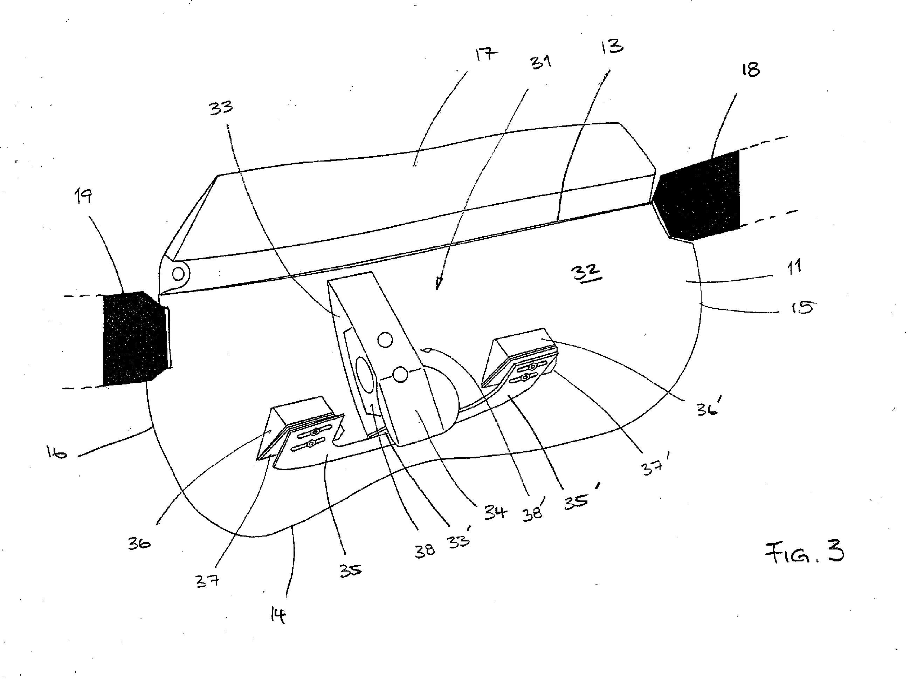

Figure 3 shows a schematic perspective rear view of the sports glasses 10 of Figure 1. Figure 3 discloses a module 31 attached to the inner surface 32 of the visor 11. The module 31 comprises a first attachment portion 33 arranged in contact with the inner surface 32 of the visor, a bridge portion 34 facing the nose of a wearer and two support portions 35, 35' for a pair of optical prisms 36, 36'. The prisms 36, 36' are fixedly mounted to a pair of holders 37, 37', which in turn are adjustably attached to its respective support portions 35, 35'. The support portions 35, 35' are each arranged to extend in a lateral direction to a position adjacent the respective eye of the wearer. The support portions 35, 35' extend in both directions along the inner surface of the visor 11, ending in a location in the field of vision adjacent the eyes of the wearer. The sheet metal plate making up the support portions 35, 35' is adjustably attached to a lower section 33' of the attachment portion 33, which lower section 33' is bent inwards, away from the visor 11, to be located in the desired plane for the support portions 35, 35'. The end portion of this inwardly bent section can be welded to the facing portion of the bridge portion, for increasing the stiffness of the module. The bridge portion 34 can be arranged to rest directly against the bridge of the nose, but can also be provided with a soft or resilient intermediate portion for increased comfort. The module shown in Figure 3 is adapted for the latter arrangement, wherein the intermediate portion (not shown) may be moulded to the shape of the nose of an individual for maximum comfort.

The support portion 35, 35' comprises a single flat material section, preferably made from a lightweight material such as aluminium or titanium. The said flat material section is located in a substantially horizontal plane extending in the transverse direction of the visor 11, which plane in this case coincides with an axis corresponding to the line of sight when the wearer is looking straight ahead with the head in its upright position.

The said module 31 is arranged so that the first attachment portion 33 and the bridge portion 34 are separated by a spacer portion 38, 38'. The spacer portion 38, 38' comprises a pair of transversely separated sheet metal components, comprise a closed box section attached adjacent the outer edges of and extending along at least a lower portion of the first attachment portion 33 and the bridge portion 34, respectively. This box section acts as a reinforcing structure for absorbing impact forces, in order to prevent the module or the prisms attached to the module from coming into contact with the face or eyes of the wearer, for instance, in case the wearer should accidentally fall.

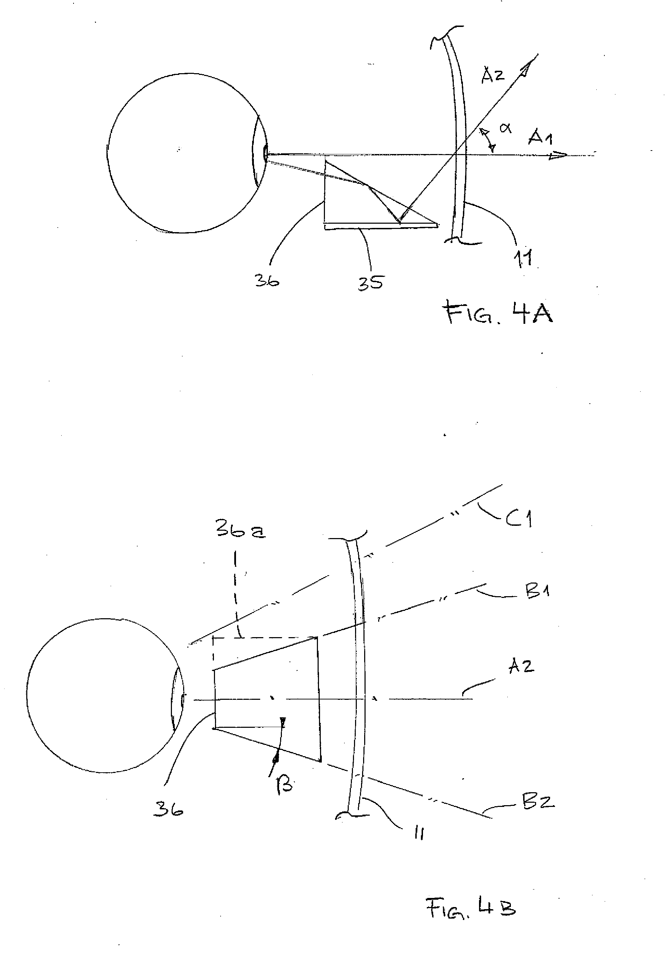

As schematically indicated in a side view in Figure 4A, an optical prism 36 is attached to a support portion, wherein the visor 11 provides a non-refracted view along a first axis A1 and the prism 36 provides a refracted view along a second axis A2. the location of the prism 36 may be selected so that the wearer can see over the upper surface of the prism when looking straight ahead along the first axis A1, with the head located in the upright position. In this way the wearer need only shift his/her gaze a short distance downwards in order to look straight ahead along the second axis A2, with the head located in the prone position. The angle α between the first axis A1 and the second axis A2 can be selected between 60° and 80°, in this example approximately 70°.

Figure 4B shows a schematic plan view wherein the prism 36 provides a refracted view along a second axis A2. From the figure it can be seen that the side surfaces of the prism diverge at an angle β from the longitudinal optical axis of the prism, which in the figure coincides with the centre axis C of the sports glasses. The side surfaces of the prism are arranged diverge in the direction of the line of sight, in order to increase the side field of vision. The angle β is preferably selected up to 15°-20°. This arrangement gives the wearer provides an improved field of vision encompassed by the axes B1 and B2. To provide the same field of vision using a conventional prism 36a with parallel side surfaces, the width of the end surface would need to correspond to the width of the forward edge of the prism, as indicated in dashed lines in Figure 4B. The transverse extension of such conventional prism 36a would provide an end surface having a width that would result in a significant reduction of the field of vision at either side thereof, as indicated by the axis C1. An arrangement using angled side surfaces according to the invention provides not only an unobstructed view at either side of the end surface of the prism, but also allows the weight of each prism to be reduced.

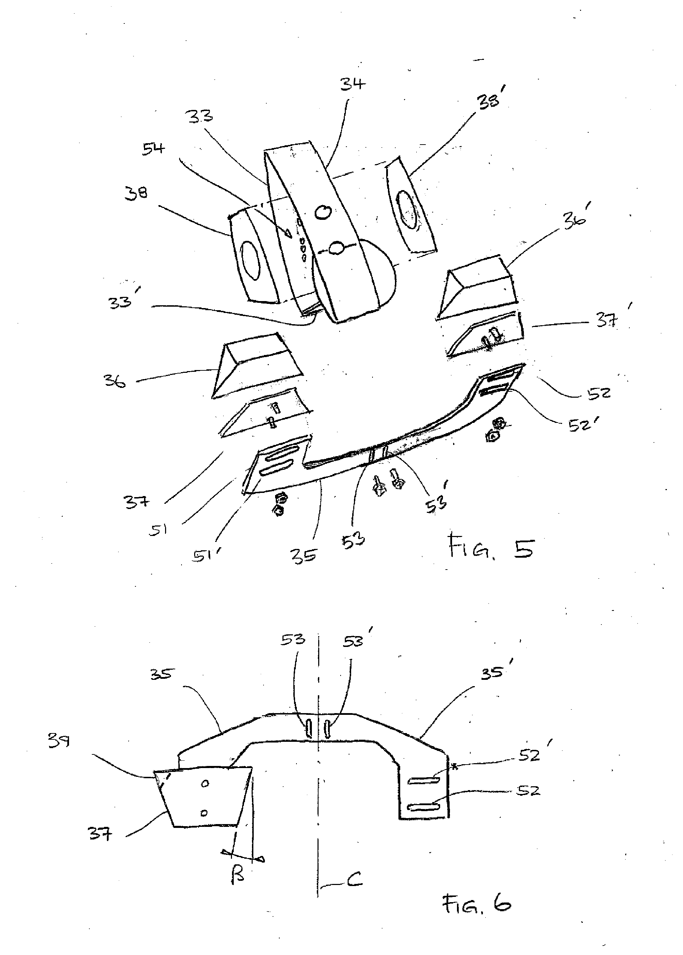

Figure 5 shows an exploded view of the module and its component parts. As described above, the module 31 comprises a first attachment portion 33 arranged in contact with the inner surface 32 of the visor, a bridge portion 34 facing the nose of a wearer and two laterally extending support portions 35, 35' for a pair of optical prisms 36, 36'. The prisms 36, 36' are fixedly mounted to a pair of holders 37, 37', which in turn are adjustably attached to its respective support portions 35, 35'. The outer ends of the support portions 35, 35' are each provided with two spaced and parallel transverse slots 51, 51'; 52, 52' through which threaded first pins on the lower surface of the holders 37, 37' can be fitted. When the prisms 36, 36' have been adjusted in their desired transverse and angular positions, they are fixed in position by tightening corresponding nuts onto the said first pins. The central portion of the metal plate making up the support portions 35, 35' is provided with a two spaced and parallel longitudinal slots 53, 53' through which threaded second pins can be inserted. The threaded second pins can then be inserted through corresponding holes in the lower section 33' of the attachment portion 33. When the support portions 35, 35' have been adjusted in their desired longitudinal position, the metal plate is fixed in position by tightening corresponding nuts onto the said second pins.

The module itself is attached to the visor 11 by means of the first attachment portion 33, located on the inner surface 32, and a second attachment portion 55 (see Figs. 1 and 2), located on the outer surface 12. The second attachment portion 55 is provided with a pair of vertically spaced threaded third pins 56 (schematically indicated in Figure 2) which pass through corresponding holes in the visor 11. The first attachment portion 33 is provided with multiple sets of holes 54, indicated in Figure 5, in this case three pairs of holes with the same spacing as the pins on the second attachment portion 55. This allows the module 31 to be located and fastened in three positions along the vertical centreline of the visor 11. When the module 31 has been located in its desired vertical position, it is fixed in position by tightening corresponding nuts onto the said third pins. Alternatively, the module can be permanently attached to the visor by means of a suitable adhesive.

Figure 6 shows a plan view of the support portions 35, 35', where a holder 37 for a prism (not shown) is attached to one of the support portions 35. The shape of the outer periphery of the holder 37 in this plan view is substantially identical to the shape of the lower surface of the prism. From the figure it can be seen that the side surfaces of the prism diverge at an angle β from the longitudinal optical axis of the prism, which in the figure coincides with the centre axis C of the sports glasses. The side surfaces of the prism are arranged diverge in the direction of the line of sight, in order to increase the side field of vision. An outer, front corner 39 of the holder 37, indicated with a dashed line in Figure 6, may be removed under certain circumstances. For instance, where it is required to adjust the holder 37 and its prism to an extreme outer position, and/or if the support portions 35, 35' must be adjusted to an extreme forward position adjacent the visor, then a holder and prism with a removed corner can be used to avoid contact with the inner surface of the visor.

## Claims

1. Sports glasses comprising a curved visor (11), said visor having an outer surface (12), an inner surface (32) and a continuous edge extending along the upper, lower and side portions (13, 14, 15, 16) of the visor (11), and means (18, 19) for attaching the sports glasses to a user arranged at the side portions (15, 16) of the visor (11), **characterized in that** the glasses further comprises a module (31) attached to the inner surface (32) of the visor (11), which module (31) comprises a first attachment portion (33) arranged in contact with the inner surface of the visor (11), a bridge portion (34) facing the nose of a user and at least one support portion (35, 35') for an optical prism arranged to extend in a lateral direction to a position adjacent an eye of the wearer, and a prism (36, 36') attached to each support portion (35, 35'), wherein the visor (11) provides a non-refracted view along a first axis (A1) and the prism provides a refracted view along a second axis (A2).

2. Sports glasses according to claim 1, **characterized in that** the first attachment portion (33) and the bridge portion (34) are separated by a spacer portion (38, 38').

3. Sports glasses according to claim 2, **characterized in that** the spacer portion (38, 38') comprises a closed box section extending downwards along at least a portion of the first attachment portion (33).

4. Sports glasses according to any one of claims 1-3, **characterized in that** the support portion (35, 35') is adjustably mounted adjacent a lower portion of the module (31).

5. Sports glasses according to any one of claims 1-4, **characterized in that** the support portion (35, 35') is adjustable axially along an axis parallel to a central axis (C) of the visor (11).

6. Sports glasses according to any one of claims 1-5, **characterized in that** the first attachment portion (33) and the bridge portion (34) are joined at an upper portion of the module (31).

7. Sports glasses according to any one of claims 1-6, **characterized in that** the first attachment portion (33) is removably attached to a second attachment portion (55) by means of at least one fastening means extending through the visor (11).

8. Sports glasses according to claim 7, **characterized in that** the position of the first attachment portion (33) is adjustable relative to the second attachment portion (55) along a centre axis, connecting the upper and lower portions of the visor (11).

9. Sports glasses according to any one of claims 1-8, **characterized in that** the at least one prism is adjustably mounted on the support portion (35, 35').

10. Sports glasses according to any one of claims 1-9, **characterized in that** the at least one prism (36, 36') is adjustable in the lateral direction at right angles to the second axis (A2) and/or angularly relative to the second axis (A2).

11. Sports glasses according to any one of claims 1-10, **characterized in that** the at least one prism (36, 36') has diverging side surfaces, in order to increase the side field of vision.

12. Sports glasses according to claim 11, **characterized in that** the side surfaces diverge at an angle up to 20° relative to a central axis (C) of the visor (11).
